Europäisches Patentamt

European Patent Office

Office européen des brevets

(19)

(11) Publication number: **0 132 956 B1**

(12) # EUROPEAN PATENT SPECIFICATION

(45) Date of publication of patent specification: **03.04.91**   (51) Int. Cl.5: **G02B  26/10, G02B 5/32**

(21) Application number: **84304444.7**

(22) Date of filing: **29.06.84**

(54) **Light beam scanning apparatus.**

(30) Priority: **30.06.83 JP 119098/83**

(43) Date of publication of application:
**13.02.85 Bulletin  85/07**

(45) Publication of the grant of the patent:
**03.04.91 Bulletin  91/14**

(84) Designated Contracting States:
**DE FR GB**

(56) References cited:
**EP-A- 0 062 545**
**DE-A- 250 946**
**US-A- 4 325 601**

**Optik 57, No. 2 (Nov. 1980) 161-171**

(73) Proprietor: **FUJITSU LIMITED**
**1015, Kamikodanaka Nakahara-ku**
**Kawasaki-shi Kanagawa 211(JP)**

(72) Inventor: **Yamagishi, Fumio**
**40-1-5-541, Oya Ebina-shi**
**Kanagawa 243-03(JP)**
Inventor: **Hasegawa, Shinya**
**Fukuju Kopo 202 1-16-15, Haramachida**
**Machida-shi Tokyo 194(JP)**
Inventor: **Ikeda, Hiroyuki**
**1-7, Mugita-cho Naka-ku**
**Yokohama-shi Kanagawa 213(JP)**
Inventor: **Inagaki, Takefumi**
**1341-75, Ozenji Asao-ku**
**Kawasaki-shi Kanagawa 215(JP)**

(74) Representative: **Sunderland, James Harry et al**
**HASELTINE LAKE & CO Hazlitt House 28**
**Southampton Buildings Chancery Lane**
**London WC2A 1AT(GB)**

## Description

The present invention relates to a light beam scanning apparatus using a hologram rotator.

Recent research and development has applied holography to the operation of a laser printer, in which the laser printer produces an image by scanning a laser light beam over a scanning plane through a polygon mirror and lens system. Other developments include low cost light beam scanning apparatus using a hologram scanner provided with a hologram disk instead of the polygon mirror and lens system. Laser printers which include a hologram scanner have fewer problems when utilising a gas, e.g. He-Ne, laser or the like, than, for example, those using a laser diode. This is because, with a laser diode, deviation of the scanning position of the light beam occurs due to mode hopping, thereby preventing the apparatus from obtaining a satisfactory performance. Also, the linearity of the scanning beam (uniform velocity characteristic of the scanning beam to the uniform angular velocity of the hologram disk) and the image focusing characteristics of the scanning beam without optical lenses are not completely satisfactory.

EP-A-0 062 545 discloses an optical scanning system including a spinner carrying a number of plane linear diffraction gratings, and a stationary diffraction grating having the same properties as, and formed under the same conditions as, the spinner diffraction grating. The stationary diffraction grating is interposed between a diode laser and the spinner, and is intended to compensate for wavelength shifts in the laser light. A doublet lens arranged after the spinner is employed to focus the diffracted light beam from the spinner.

An article in the journal "Optik", November 1980, Vol. 57 No. 2, pages 161-172 by Weingärtner et al, "Inkoharente polychromatische Abbildung mit holographischen abbildenden Elementen und Systemen II"; discloses an arrangement of two fixed holograms, namely a holographic grating and a holographic lens, the latter having a light-converging function. This arrangement is intended to correct transversal chromatic error due to a non-monochromatic light source.

According to the present invention, there is provided a light beam scanning apparatus comprising:

a rotatable hologram formed on a circularly shaped disc and having fringes for diffracting an incident light beam, said light beam having a component of tilt in a first direction with respect to the normal of said rotatable hologram, said rotatable hologram providing a diffracted light beam exiting in a direction having a component of tilt substantially opposite said first direction with respect to said normal;

a fixed hologram also for diffracting the light beam, the rotatable and fixed holograms being arranged to diffract the light beam in mutually opposite directions with respect to said normal so as to reduce deviation due to wavelength changes of the light beam; and

a scanning surface upon which the light beam diffracted by the rotatable hologram and the fixed hologram is focused, said surface being scanned by the light beam owing to the rotation of the rotatable hologram;

characterised in that:

the fixed hologram is a post hologram arranged to receive the light beam after diffraction by the rotatable hologram and having fringes such that the light beam from said rotatable hologram converges after passing through said post hologram so as to effect the focussing of said light beam on said scanning surface.

An embodiment of the present invention can provide a light beam scanning apparatus wherein deviation of the scanning position of the light beam due to mode hopping of the light source does not occur, and improved linear scanning and image focusing characteristics of the scanning beam are obtained, by providing a post-hologram which corrects effects due to mode hopping of the light source, and moreover improves the linear scanning function and focusing of the light beam on the scanning plane, at a subsequent stage to the rotatable hologram. Thus, it is no longer necessary to employ additional optical elements in order to obtain a focussed, linear scanning beam.

Reference is made, by way of example, to the accompanying drawings in which:

Figure 1 shows a diagram of a light path in a conventional laser printer using a hologram scanner;

Fig. 2 shows a diagram of a light path in another conventional laser printer using a hologram scanner;

Fig.3 shows a diagram of a light path in a light beam scanning apparatus according to a first embodiment of the present invention;

Fig.4 shows a perspective view explaining a post-hologram shown in Fig.3;

Fig.5 shows a top view of the post-hologram shown in Fig.3 explaining light paths therethrough;

Fig.6 shows a side view of the post-hologram shown in Fig.3 explaining light paths therethrough;

Fig.7 shows a perspective view of an example arrangement of the hologram disk, the post-hologram, and the scanning plane in the apparatus shown in Fig.3;

Fig.8 shows a diagram of a light path through the hologram disk shown in Fig.7;

Fig.9 is a top view showing light paths through the post-hologram shown in Fig.7;

Fig.10 is a side view showing light paths through the post-hologram shown in Fig.7;

Fig. 11 is a graph showing a characteristic of a light wave for forming the post-hologram in the example shown in Fig. 7;

Fig. 12 shows a perspective view of a light beam scanning apparatus according to a second embodiment of the present invention;

Fig. 13 is a top view showing light paths through the post-hologram shown in Fig. 12;

Fig. 14 is a side view showing light paths through the post-hologram shown in Fig. 12;

Fig. 15 is a top view showing the light paths in the apparatus shown in Fig. 12;

Fig. 16 is a side view showing the light paths in the apparatus shown in Fig. 12;

Fig. 17 is a diagram of a light path in a light beam scanning apparatus according to a third embodiment of the present invention;

Fig. 18 is a top view showing light waves for forming the post-hologram shown in Fig. 17;

Fig. 19 is a side view showing light waves for forming the post-hologram shown in Fig. 17;

Fig. 20 is a top view showing light waves, as an example using waves having no aberration, similar to those shown in Fig. 18;

Fig. 21 is a top view showing light waves for forming the post-hologram shown in Fig. 17; and

Fig. 22 is a side view showing light waves for forming the post-hologram shown in Fig. 17.

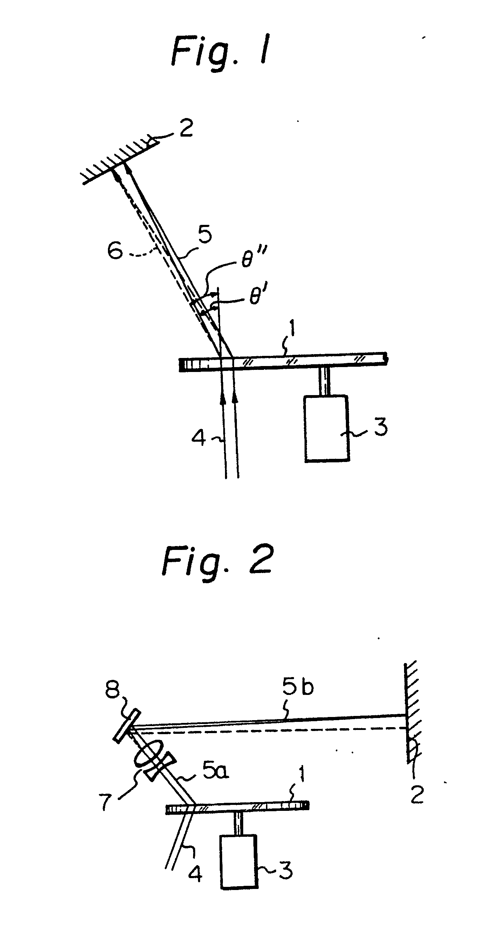

Prior to the description of the preferred embodiments, known apparatus will be explained with reference to Figs. 1 and 2.

A prior art laser printer using a hologram scanner is shown in Fig.1. In Fig.1, a light beam 4 directed on to a hologram disk 1, rotated continuously by a motor 3, is diffracted by hologram interference fringes formed by the disk, to form a diffraction beam 5 having a diffraction angle $\theta'$, and is converged on a scanning plane 2. When a laser diode (semiconductor laser) is used as the light source for the light beam 4, the wavelength of the light beam 4 changes whenever there are fluctuations in the temperature. For example, when the wave length becomes longer, the diffraction angle becomes large and a diffraction beam 6 having the diffraction angle $\theta''$ (shown by a broken line) is obtained. The result is (firstly) a deviation in the convergence position of the light beam. Also, the scanning velocity of the diffraction light 6 on the scanning plane 2 to the uniform angular velocity of the motor 3 is not (no longer) uniform, therefore, the scanning linearity is not satisfactory. Further, the image formation characteristic (focusing of the light beam) is not always satisfactory.

Figure 2 shows another prior art apparatus using a hologram scanner wherein a diffraction beam 5a is passed through an $f \cdot \theta$ lens 7 to obtain a satisfactory scanning linearity. In Fig. 2, a light beam 4 directed to a hologram disk 1 rotated by a motor 3 is diffracted by hologram interference fringes to become a diffraction beam 5a. The diffracted light 5a then passes through the $f \cdot \theta$ lens 7, is reflected by a mirror 8, and converges on a scanning plane 2. The apparatus in Fig. 2 has a better scanning linearity of a light beam 5b than that shown in Fig. 1. However, deviation still occurs when a laser diode is used as a light source, and the wavelength of the light beam 4 fluctuates. For example, if the wave length becomes longer, the diffraction angle becomes large, the diffraction light becomes as shown by the broken line and is reflected by the mirror 8, and the scanning position of the light beam changes on the scanning plane. In addition, since an $f \cdot \theta$ lens 7 is very costly, the production cost of the apparatus is expensive.

Another prior art apparatus is disclosed in Japanese Unexamined Patent Publication (Kokai) No. 57-181523 (priority claimed by U.S.S.N. 252,508). In this apparatus a fixedly located hologram is arranged at a stage preceding the hologram rotator.

In the following description, embodiments of the present invention are explained in detail with reference to the drawings.

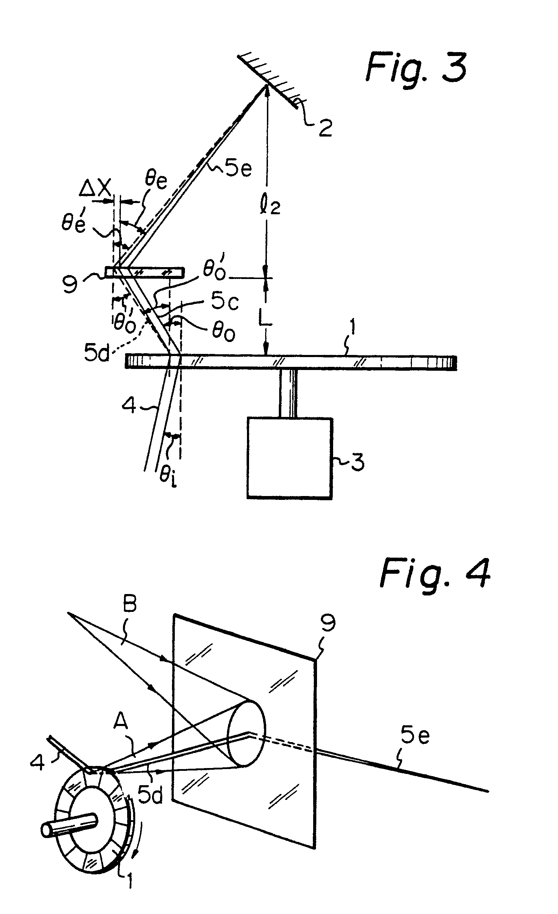

Figure 3 shows light beam paths in a light beam scanning apparatus according to a first embodiment of the present invention. The reference numerals used in Fig. 3 are the same as those used in Fig. 1 and show the same elements, thus repeated explanations are abbreviated.

In Fig. 3, a hologram disk 1 is rotated continuously by a motor 3 and a coherent light beam 4, for example, a laser beam, is irradiated to the hologram circular disk 1. The irradiated light beam 4 is diffracted through interference fringes on the hologram disk 1 and applied to a fixedly located post-hologram 9 registered with a hologram by which the light beam is diffracted to the direction opposite to or away from that in which the light beam is diffracted by the hologram disk 1. The post-hologram 9 is fixed parallel to the hologram disk 1 at a predetermined distance. The diffracted light diffracted through the post-hologram 9 converges on the scanning plane 2.

The hologram registered on the hologram disk 1 converges and scans the light beam. The following description is of a case wherein a laser diode is used as a light source of the irradiation light beam 4 applied to the hologram disk 1. Since laser diodes at present suffer from mode hopping due to changes in temperature, the scanning position of the light beam is deviated. Therefore, the present apparatus provides the post-hologram 9 on which a hologram is registered so that the applied light beam is diffracted to a direction opposite to (away from) that in which the light beam is diffracted by the hologram disk 1. The light beam 4 from the laser diode is incident on the continuously rotating hologram disk 1 at a predetermined angle $\theta_i$. The incident light beam 4 becomes a diffracted light beam 5c diffracted at a diffraction angle of $\theta_0$ by the interference fringes on the hologram disk 1. If the wavelength of the light beam 4 is $\lambda$ and the spatial frequency of the hologram registered on the hologram disk 1 is f, the following equation is satisfied.

$\sin\theta_0 = -\sin\theta_i + f\lambda$

If the wavelength of the light beam 4 from the laser diode changes by $\Delta\lambda$ due to change in the temperature, in the above equation the term $f\lambda$ becomes $f(\lambda + \Delta\lambda)$ and the diffraction angle is also changed. If the new diffraction angle is $\theta'_0$, the following equation is obtained.

$\sin\theta'_0 = -\sin\theta_i + f(\lambda + \Delta\lambda)$

The correction of the diffraction angle resulting from the wavelength deviation $\Delta\lambda$ of the light beam 4, is carried out by setting the diffracting directions of the post-hologram 9 and the hologram disk 1 opposite to each other, so as to cancel the effect of $\Delta\lambda$.

The hologram is further registered to include information for scanning with linearity on the scanning plane 2. The post-hologram 9 can be registered with a hologram providing both correction of deviation of the scanning position due to mode hopping and linear scanning, by eliminating aberration of the diffracted light beam.

The correction of deviation of the light beam converging position due to mode hopping of the laser diode, performed by the post-hologram, is now explained.

When light is projected on to the hologram disk 1 having a spatial frequency (of interference fringes) fd ,at incident angle $\theta_i$ and is diffracted at the angle of $\theta_0$, the following equation holds.

$\sin\theta_i + \sin\theta_0 = fd\lambda$

When the diffracted light is applied to a post-hologram 9 having a spatial frequency fp, and is diffracted at the angle of $\theta_e$( toward a reverse inclination ),the following equation holds.

$\sin\theta_0 + \sin\theta_e = fp\lambda$

When the wavelength of the incident light changes to $\lambda + \Delta\lambda$, the diffraction angle $\theta'_0$ from the hologram disk 1 satisfies the following equation.

$\sin\theta_i + \sin\theta'_0 = fd(\lambda + \Delta\lambda)$

The diffracted light from the hologram disk is projected to a position on the post-hologram 9 deviated by distance $\Delta X$. At the post-hologram 9, the spatial frequency is $fp + (dfp/dx)\Delta X$ and the light diffracted by the post-hologram 9 satisfies the following equation.

$\sin\theta'_0 + \sin\theta'_e = (fp + (dfp/dx)\Delta X)(\lambda + \Delta\lambda)$

To ensure that the diffraction light is in the same position on the scanning plane despite the change in its wavelength, it may become necessary to establish the following relationship between the distance L from the hologram disk 1 to the post-hologram 9 and the distance $\ell_2$ from the post-hologram 9 to the scanning plane.

$L(\tan\theta'_0 - \tan\theta_0) = \ell_2(\tan\theta'_e - \tan\theta_e)$

From the equations above, to ensure that the position of the light beam is not changed by mode hopping, the relationship shown in the following equation may need to be satisfied.

$$L(fd\Delta\lambda)/\cos^3\theta_0 = \ell_2\{(fp-fd)\Delta\lambda + (\frac{dfp}{dx})\Delta X.\lambda\}/\cos^3\theta_e$$

As can be seen by the above equation, if the term $(dfp/dx)\Delta X$ is to be small, the distance L between the hologram disk 1 and the post-hologram 9 should be made small, and fp = fd; namely, using the same spatial frequency in both holograms, the deviation of the light beam position due to mode hopping can be kept small.

The registering (forming) of the hologram on the post hologram to perform linear scanning on the scanning plane is explained as follows.

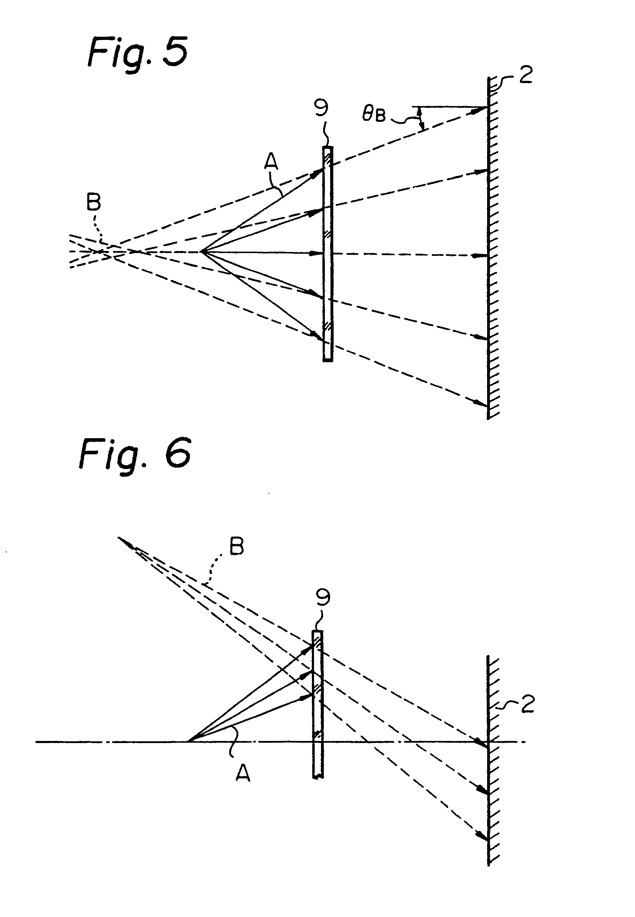

In Fig. 4, the principle of the post-hologram used in a light beam scanning apparatus according to the present invention is illustrated. Figures 5 and 6 show a top view and a side view of the light paths from two light sources, respectively.

In Fig. 4, the post-hologram 9 is registered by the interference of light from light sources A and B. One or both of the light sources A and B produces nearly spherical waves (wave fronts) having spherical

4

aberration. As shown in Figure 5, when the spherical wave A is irradiated to the post-hologram 9, the spherical wave B (shown in broken lines) is reconstructed. Linear scanning on the scanning plane 2 is performed if the aberrated spherical wave B is used for registering the post-hologram 9. Namely, when the post-hologram 9 is irradiated by the spherical wave A, the wave front of the spherical wave B has a larger diffracted angle toward the outer waves and a smaller diffracted angle/toward the inner waves, i.e., the angle $\theta_B$ between this wave and the normal axis of the scanning plane 2 gradually becomes larger toward the outside direction and gradually becomes smaller toward the inside direction. When the diffracted light 5d-(into which the light beam 4 is diffracted through the hologram disk 1 rotated in the direction shown by an arrow in Fig. 4)is irradiated to the post-hologram 9 (registered by the light sources having spherical wave fronts A and B), the deviation of scanning position of the diffracted light 5e due to mode hopping is corrected by the post-hologram 9, and the diffracted light 5e with added linear scanning characteristics is projected as a scanning beam.

Figure 6 is a light path diagram wherein an aberrated wave front of the nearly spherical wave A and the wave front of the spherical wave B are applied. If the wave front of the spherical wave A having a just reversed aberration against the aberration included in the above-mentioned wave front of the spherical wave B is irradiated to the post-hologram 9, as shown in Fig. 5, the diffracted angle to the outer wave is large and the diffracted angle to the inner wave is small, and as a result, linear scanning is obtained. Therefore, if the hologram shown in Figs. 5 or 6 is registered on the post-hologram 9, linear scanning of the light beam (i.e., uniform scanning velocity per angular velocity of the hologram disk) is provided. Moreover, as shown in Fig. 3,by the cooperation of the hologram disk 1 and the post-hologram 9 (on which a hologram is registered, wherein the incident light beam is diffracted in an opposite (reverse) way and with a different spatial frequency from the hologram on the hologram disk 1 ) , deviation of the diffraction angle due to mode hopping is corrected and the light beam can be converged at a predetermined position on the scanning plane. If two light waves are used to form the hologram, many post-holograms 9 can be made, and thus the production cost of the apparatus is reduced.

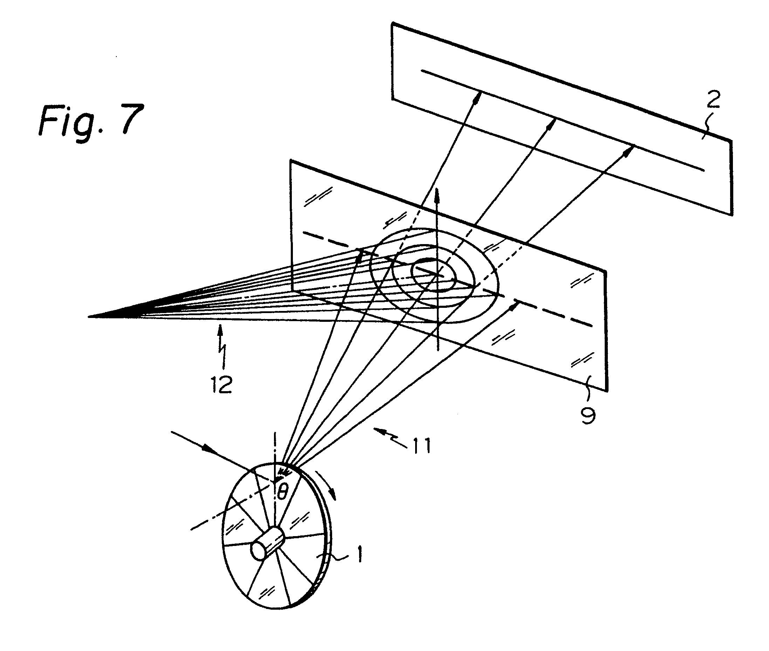

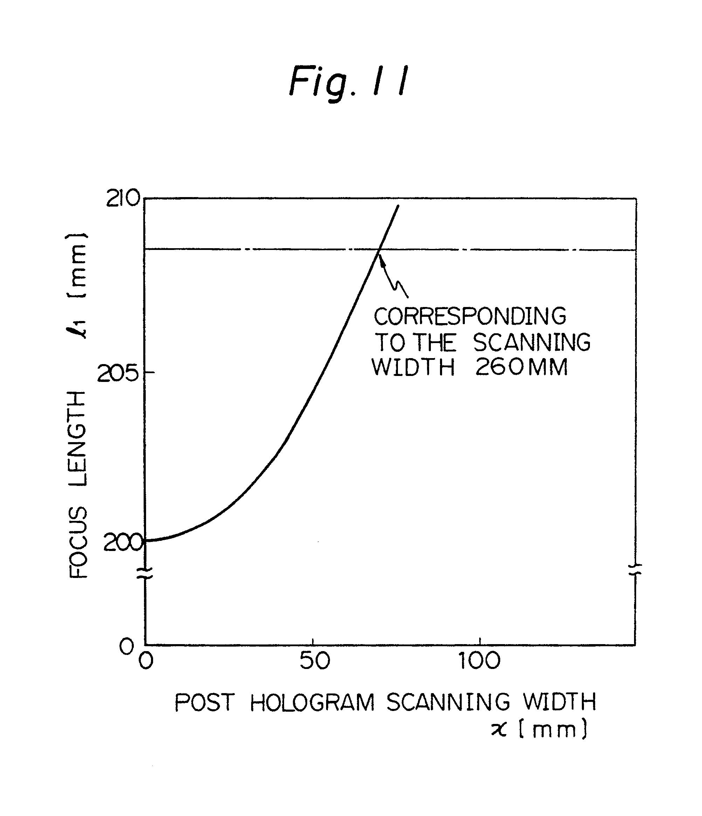

An example of post-holograms in accordance with a first embodiment of the invention is described in detail below with reference to Figs. 7, 8, 9, 10 and 11.

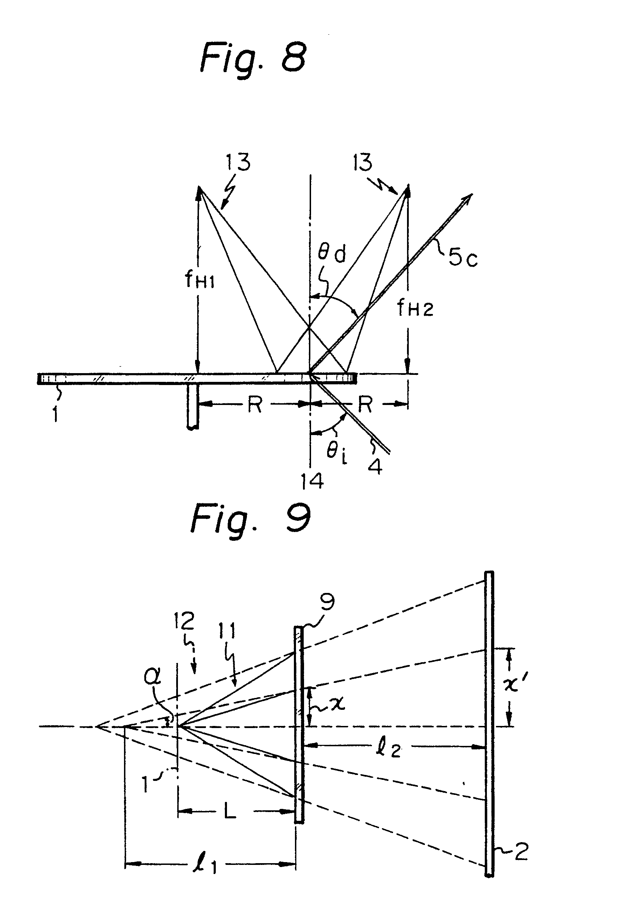

The hologram of the hologram disk is made with two spherical waves symmetric to each other, as shown in Fig. 8. The hologram forming waves 13 are irradiated to the hologram disk 1 from positions symmetric about the center 14 of the hologram.

The relationship between a rotation angle $\theta$ of the hologram disk 1 and a scanning width x of the post-hologram 9 is shown in equation (1).

$$x(\theta) = \frac{2LSRsin\theta}{\sqrt{f_{H2}^2 + (1 - S^2)(5R^2 - 4R^2cos\theta)}} \qquad ---(1)$$

Here L is a distance between the hologram disk 1 and the post-hologram 9, S is $\lambda_2/\lambda_1$ , $\lambda_1$ is a hologram forming wavelength, $\lambda_2$ is a reconstruction wavelength, R is the half value of the distance between two light sources for forming the hologram in the hologram disk 1, and $f_{H2}$ is a distance between the hologram disk 1 and one of the light sources.

For performing linear scanning, the following relationship must be established.

$$x'/\theta = C \qquad ---(2)$$

Here x' is the scanning width on the scanning plane 2, and C is a constant value. However, the next equation follows from the geometry of Fig. 9,

$$x' = (\ell_1 + \ell_2)tan\alpha = (\ell_1 + \ell_2)x/\ell_1$$

$$\text{therefore,} \quad \frac{(\ell_1 + \ell_2)x}{\ell_1\theta} = C. \qquad ---(3)$$

In equation (3), the constant value C is determined as follows. If $\theta \sim 0$, from equation (1),

$$x \approx 2LSR\theta / \sqrt{f_{H2}^2 + (1 - s^2)R^2} \qquad ---(4)$$

Equation (4) is then substituted in equation (3), and

$$\frac{x'}{\theta} \approx \frac{(\ell_1 + \ell_2) \times 2LSR}{\ell_1 \sqrt{f_{H2}^2 + (1 - s^2)R^2}} \qquad ---(5)$$

The mark $\approx$ signifies "approximately equal to". When $\theta \approx 0$, assuming $\ell_1 \approx L$,

$$C = (L + \ell_2) \times 2SR / \sqrt{f_{H2}^2 + (1 - s^2)R^2} \qquad ---(6)$$

Generally
$$\frac{x'}{\theta} = \frac{(\ell_1 + \ell_2)x}{\ell_1 \theta}$$
$$= \frac{(\ell_1 + \ell_2)}{\ell_1} \cdot \frac{2LSR\sin\theta}{\theta \sqrt{f_{H2}^2 + (1 - s^2)(5R^2 - 4R^2\cos\theta)}}$$

The latter term may be assumed to be
$$\frac{\ell_1 + \ell_2}{\ell_1} C_0 \qquad ---(7)$$

Therefore,

$$\frac{\ell_1 + \ell_2}{\ell_1} C_0 = C \qquad ---(8),$$

$$\ell_1 = \frac{\ell_2 C_0}{C - C_0} \qquad ---(9)$$

If the post-hologram is made using a wave 12 (objective wave) satisfying the equation (9) and a divergent wave 11, linear scanning is enabled. Examples of individual dimensions are as follows:

$f_{H1} = f_{H2} = 180$ mm, $R = 60$ mm, $\lambda_1 = 325$ nm, $\lambda_2 = 760$ nm, $\theta_i \approx \theta_d = 45°$, $L = \ell_2 = 200$mm,

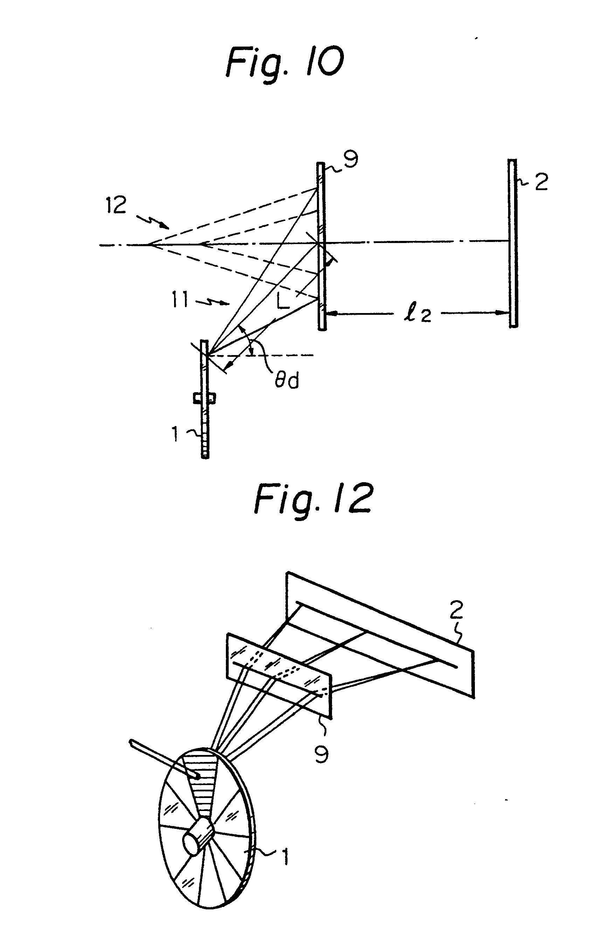

In the above example, when the post-hologram was formed by one wave having aberration as shown in Fig.10 as an object wave 12 (wavelength 760 nm) and the other wave (wavelength 760 nm) as a reference wave 11, completely linear scanning was carried out in the necessary scanning width of 260mm. The aberrated wave front 12 was realized using a lens.

Compensation for deviation of the light beam resulting from mode hopping of the laser diode, is now described for the above example.

Mode hopping in a laser diode of wavelength 760nm usually effects a deviation of $+0.3$ nm in the wavelength. This corresponds, in the above example, to a position change of $+495$ $\mu$m perpendicular to the scanning direction, without a post-hologram. This results in a deterioration of the printing quality of a laser printer. On the other hand, where a post-hologram is used, the post-hologram diffracts the light beam to the direction opposite to that in which it is diffracted by the hologram disk 1, whereby the deviation of scanning position perpendicular to the scanning direction considerably decreases, e.g., within $\pm$ 56 um.

Where a simple plane grating is used (for example, as shown in Japanese Unexamined Patent Publication 55-161211) as a hologram disk 1, equation (1) may be substituted by the following equation (1)'.

$$x(\theta) = \frac{L\sin\theta_i \sin\theta}{\sqrt{1 - \sin^2\theta_i - (f\lambda_2)^2 + 2\sin\theta_i f\lambda_2 \cos\theta}}$$

$$\text{---}(1)'$$

In this condition, the line scanning is performed. In the equation, f is the spatial frequency.

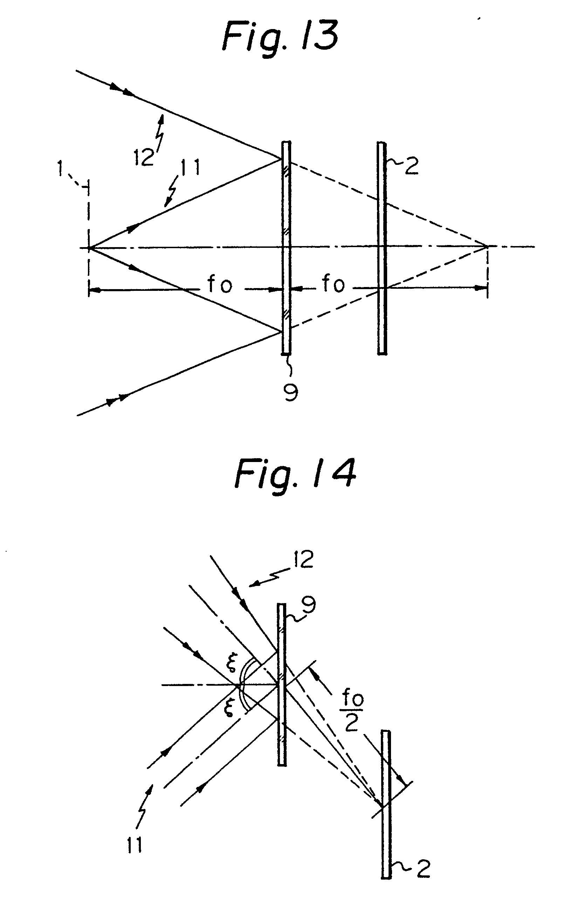

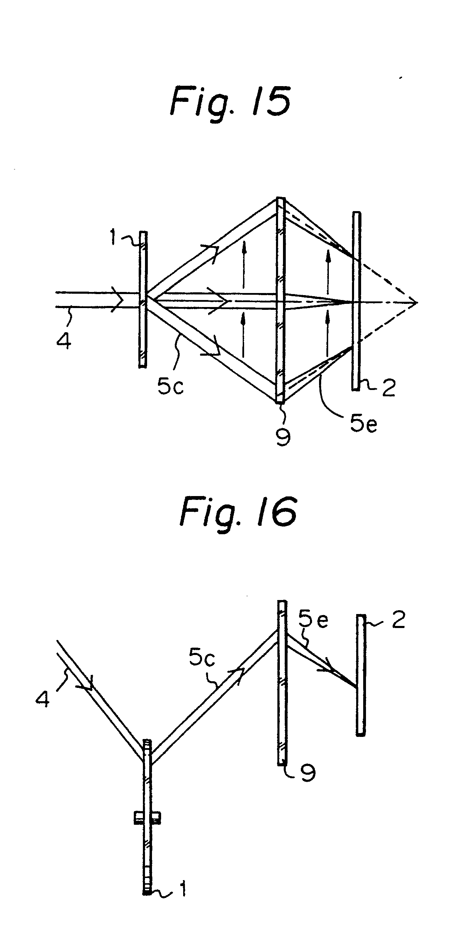

A light beam scanning apparatus according to a second embodiment of the present invention is explained with reference to Figs. 12 to 16.

Figure 12 shows a schematic perspective view diagram of the apparatus. A simple plane grating is used for the hologram of the hologram disk 1. The apparatus provides the image focusing characteristics. A method of forming a post-hologram 9 having image focusing characteristics is shown in Figs. 13 and 14. In Fig. 13, showing a top view, the post-hologram 9 is formed by a divergent spherical wave 11 and a convergent spherical wave 12 having the same focal length $f_0$. In a side view as shown in Fig.14, the object wave 12 is a convergent spherical wave having a focal length $f_0/2$ and a reference wave 11 is a plane wave. A wave having an astigmatic difference as shown in the above example is obtained by using a cylindrical lens or the like.

A particular example in accordance with this embodiment is as follows. In the hologram disk:

Spatial frequency: f = 1855.2 lines/mm

Reconstruction wavelength: 760 nm (laser diode)

Incident angle and diffraction angle:

$\theta_i \sim \theta_d \sim 45°$ Reconstruction wave and diffraction wave: plane wave

In forming the post-hologram,

Focal length: $f_0$ = 600 mm

Incident angle $\xi = 45°$

Hologram forming wavelength: 760 nm (laser diode). In the above arrangement, within the necessary scanning width of 130 mm on the scanning plane, the image focusing characteristics are of a high quality. When the deviation of the scanning line by mode hopping is $\pm$ 0.3 nm, a deviation of $\pm$ 900 $\mu$m occurs on the post-hologram. However, by using the post-hologram specified above, the deviation on the scanning plane decreases to within $\pm$ 2 $\mu$m.

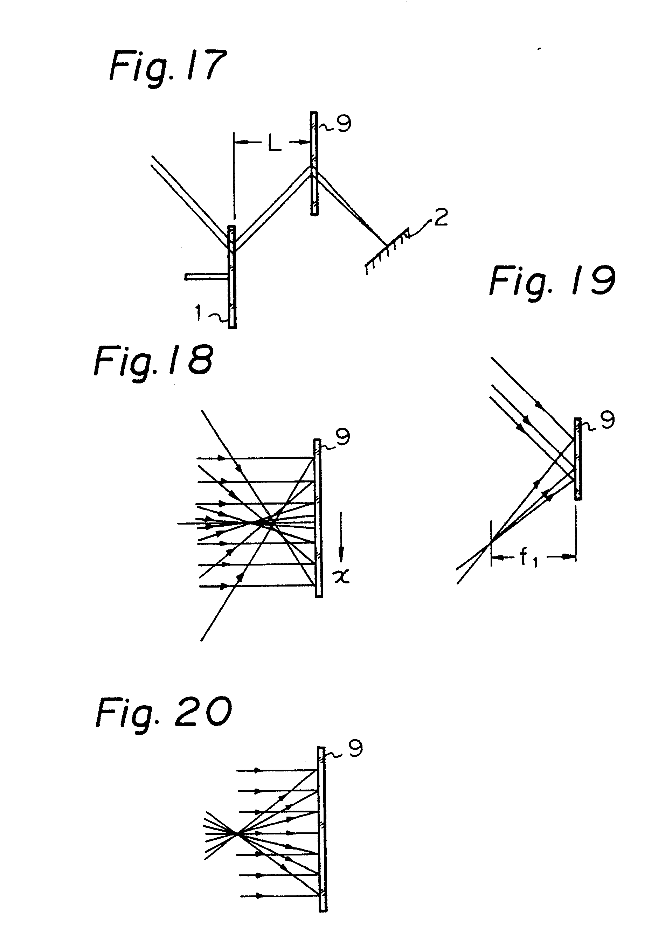

A light beam scanning apparatus according to a third embodiment of the present invention is explained with reference to Figs. 17 to 22. In this embodiment, reduction of the deviation of the scanning position due to mode hopping, linear scanning, and satisfactory image focusing characteristics can be realized by using a hologram rotator (disk)(1) projecting a linear and parallel diffraction beam and a post-hologram (9) formed with two waves, i.e., a plane wave and a divergent wave.

The hologram rotator provides a hologram having a single spatial frequency of 1860 lines/mm. The hologram is formed, for example using an Ar laser with a wavelength of 488 nm, setting the waves at an incident angle of 27°, and causing interference of two plane waves. When the light beam of a semiconductor laser of wavelength 760 nm is directed at an incident angle of 45° onto the hologram rotator, the parallel beam is diffracted into a straight-line scanning beam. The scanning position x, a distance L from the hologram rotator (disk 1), is given approximately by the following equation as a function of the rotation angle 8 of the hologram disk 1.

$$x = 2L\sin\theta / \sqrt{4\cos\theta - 3} \qquad \text{---}(10)$$

The deviation $\beta$(%) from completely linear scanning is given by the equation (11).

$$\beta = 100(x - 2L\theta)/2L\theta = 100(\sin\theta/\sqrt{4\cos\theta-3}-\theta)/\theta$$

$$\text{---}(11)$$

In the equation, if $\theta = 10°$, $\beta$ becomes 2.7%. An improvement of the image focusing characteristic of the parallel light beam and the linear scanning characteristic is realized by the provision of a post-hologram formed using the plane and divergent waves and the arrangement of the reconstruction optical system.

The wave fronts for forming the post-hologram are preferably as shown in the top view of Fig. 18 and the side view in Fig. 19. Namely, in top view one wave front is a divergent wave having a spherical aberration and, in side view, one wave front is a spherical wave. By providing aberration, improvement of the linear scanning characteristic and the image focusing characteristic is attained, when compared with the effect with no aberration, that is a spherical wave as shown in Fig. 20 (top view).

In the above-mentioned hologram, the spatial frequencies $f_x(x)$ and $f_y(y)$ are in general given by the following equations (12) and (13), where $\lambda_2$ is a reconstruction wavelength.

$$\lambda_2 f_x(x) = \frac{Sx}{\sqrt{S'^2_x f^2 + x^2}} \qquad \text{---(12)}$$

$$\lambda_2 f_y(y) = \frac{Sy}{\sqrt{S'^2_y f^2 + y^2}} \qquad \text{---(13)}$$

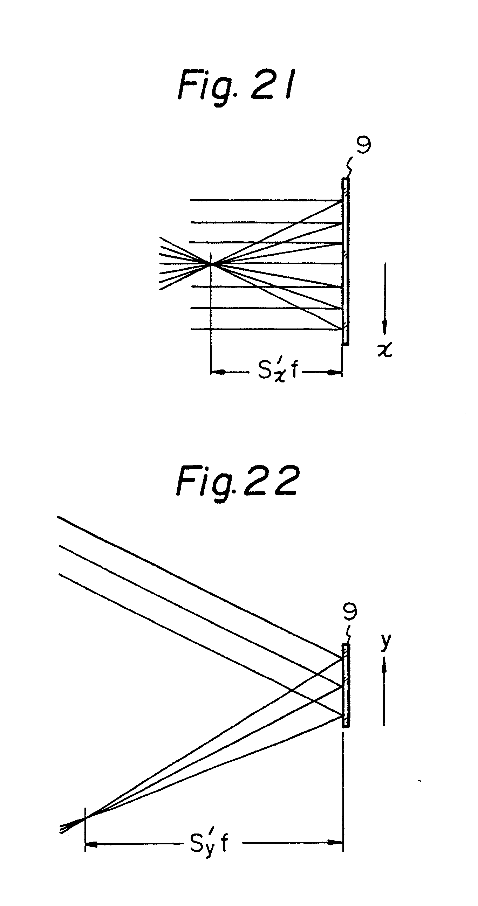

Below, the forming procedure of the post-hologram 9 is described in a concrete example. If a forming wavelength of 488 nm is provided by an Ar laser and reconstruction is performed by a laser diode of wavelength 760 nm, the quantity S in equations (12) and (13) is 1.557. As shown in Figs. 21 and 22, as one wave front, a divergent wave having astigmatism in the x direction and focal length $S'_x f = 467.2$ mm ($S'_x = 1.557$), in the y direction focal length $S'_y f = 936.2$ mm ($S'_y = 3.120$) is used. The other wave front is a plane wave at incident angle 27°. As a result, the hologram in equations (12) and (13) substituted with the values $S = 1.557$, $f = 300$ mm, $S'_x = 1.557$, and $S'_y = 3.120$ is obtained and the hologram includes information regarding linear scanning characteristics and image focusing characteristics.

If the distance between the post-hologram and the hologram disk is 300 mm, a high quality focusing beam is projected to a position at a distance of 300 mm from the post-hologram. The deviation from completely linear scanning is -0.7% at $\theta = 10°$.

When the change of wavelength due to mode hopping of the semiconductor laser is 0.3 nm, the deviation of the scanning position is 470 $\mu$m without the post-hologram; however, by providing the post-hologram, the deviation is reduced to less than 5 $\mu$m.

In summary, according to the present invention, by combining the kinds of wave fronts used for forming the holograms of the hologram rotator (1) and the post-hologram, the light beam scanning apparatus reduces deviation of the ligth beam scanning position caused by mode hopping of a laser diode, and an improved linear scanning of the light beam and/or image focusing characteristic is obtained.

## Claims

1.  A light beam scanning apparatus comprising:

    a rotatable hologram (1) formed on a circularly shaped disc and having fringes for diffracting an incident light beam (4), said light beam having a component of tilt in a first direction with respect to the normal of said rotatable hologram (1), said rotatable hologram (1) providing a diffracted light beam (5) exiting in a direction having a component of tilt substantially opposite said first direction with respect to said normal;

    a fixed hologram (9) also for diffracting the light beam, the rotatable and fixed holograms being arranged to diffract the light beam (4,5) in mutually opposite directions with respect to said normal so as to reduce deviation due to wavelength changes of the light beam; and

    a scanning surface (2) upon which the light beam diffracted by the rotatable hologram (1) and the fixed hologram (9) is focused, said surface (2) being scanned by the light beam owing to the rotation of the rotatable hologram (1);

    characterised in that:

    the fixed hologram (9) is a post hologram arranged to receive the light beam (5) after diffraction by the rotatable hologram (1) and having fringes such that the light beam (5) from said rotatable hologram converges after passing through said post hologram (4) so as to effect the focussing of said light beam on said scanning surface (2).

2.  An apparatus as set forth in claim 1, wherein the hologram of the rotatable hologram (1) is formed using two wavefronts that are both plane waves.

3. An apparatus as set forth in claim 1, wherein the hologram of the rotatable hologram (1) is formed using two wavefronts that are a plane wave and a divergent wave.

4. An apparatus as set forth in claim 1, wherein the hologram of the rotatable hologram (1) is formed using two wavefronts that are both divergent waves.

5. An apparatus as set forth in any of claims 1 to 4, wherein said post-hologram (9) has fringes for providing a linear scanning characteristic for scanning the light beam diffracted by said post-hologram (9).

6. An apparatus as set forth in any preceding claim, wherein the post-hologram (9) is formed using two wavefronts that are both divergent waves.

7. An apparatus as set forth in any of claims 1 to 5, wherein the fringes of said post-hologram (9) are provided as a result of using two wavefronts including a convergent wave and a divergent wave.

8. An apparatus as set forth in any of claims 1 to 5, wherein the fringes of said post-hologram (9) are provided as a result of two wavefronts including a plane wave and a divergent wave.

9. An apparatus as set forth in any of claims 1 to 5, wherein said post-hologram (9) is formed with two waves at least one of which is a nearly spherical wave containing spherical aberration.

10. An apparatus as set forth in any preceding claim, wherein the post-hologram (9) is formed under different conditions from the rotatable hologram (1).

**Revendications**

1. Appareil de balayage d'un faisceau lumineux, comprenant:
   un hologramme rotatif (1) formé sur un disque ayant une configuration circulaire et ayant des franges de diffraction d'un faisceau lumineux incident (4), le faisceau lumineux ayant une composante d'inclinaison dans un premier sens par rapport à la normale à l'hologramme rotatif (1), l'hologramme rotatif (1) formant un faisceau lumineux diffracté (5) qui sort dans une direction ayant une composante inclinée en sens opposé au premier sens par rapport à cette normale,
   un hologramme fixe (9) qui est aussi destiné à diffracter le faisceau lumineux, les hologrammes rotatif et fixe étant disposés afin qu'ils diffractent le faisceau lumineux (4, 5) en sens opposé par rapport à ladite normale afin que l'écart dû aux variations de longueur d'onde du faisceau lumineux soit réduit, et
   une surface de balayage (2) sur laquelle est focalisé le faisceau lumineux diffracté par l'hologramme rotatif (1) et par l'hologramme fixe (9), ladite surface (2) étant balayée par le faisceau lumineux à la suite de la rotation de l'hologramme rotatif (1),
   caractérisé en ce que :
   l'hologramme fixe (9) est un hologramme postérieur disposé afin qu'il reçoive le faisceau lumineux (5) après diffraction par l'hologramme rotatif (1) et ayant des franges telles que le faisceau lumineux (5) provenant de l'hologramme rotatif converge après passage à travers l'hologramme postérieur (4) si bien qu'il assure la focalisation du faisceau lumineux sur la surface de balayage (2).

2. Appareil selon la revendication 1, dans lequel l'hologramme de l'hologramme rotatif (1) est formé avec deux fronts d'onde qui sont tous deux des ondes planes.

3. Appareil selon la revendication 1, dans lequel l'hologramme de l'hologramme rotatif (1) est formé avec deux fronts d'onde qui sont une onde plane et une onde divergente.

4. Appareil selon la revendication 1, dans lequel l'hologramme de l'hologramme rotatif (1) est formé avec deux fronts d'onde qui sont tous deux des ondes divergentes.

5. Appareil selon l'une quelconque des revendications 1 à 4, dans lequel l'hologramme postérieur (9) a des franges destinées à donner une caractéristique de balayage linéaire destinée à balayer le faisceau lumineux diffracté par l'hologramme postérieur (9).

6.  Appareil selon l'une quelconque des revendications précédentes, dans lequel l'hologramme postérieur (9) est formé avec deux fronts d'onde qui sont tous deux des ondes divergentes.

7.  Appareil selon l'une quelconque des revendications 1 à 5, dans lequel les franges de l'hologramme postérieur (9) sont formées par utilisation de deux fronts d'onde comprenant une onde convergente et une onde divergente.

8.  Appareil selon l'une quelconque des revendications 1 à 5, dans lequel les franges de l'hologramme postérieur (9) sont formées par deux fronts d'ondes comprenant une onde plane et une onde divergente.

9.  Appareil selon l'une quelconque des revendications 1 à 5, dans lequel l'hologramme postérieur (9) est formé à l'aide de deux ondes dont l'une au moins est une onde presque sphérique contenant de l'aberration sphérique.

10. Appareil selon l'une quelconque des revendications précédentes, dans lequel l'hologramme postérieur (9) est formé dans des conditions différentes de celles de l'hologramme rotatif (1).

## Ansprüche

1.  Lichtstrahl-Abtastvorrichtung mit:
    einem rotierbaren Hologramm (1), welches aus einer kreisförmigen Scheibe gebildet ist und Streifen zur Beugung eines einfallenden Lichtstrahls (4) hat, welcher genannte Lichtstrahl eine Neigungskomponente in einer ersten Richtung in Bezug auf die Normale des genannten rotierbaren Hologramms (1) hat, welches rotierbare Hologramm einen gebeugten Lichtstrahl (5) liefert, der in eine Richtung austritt, die eine Neigungskomponente hat, die entgegengesetzt zu der ersten Richtung in Bezug auf die genannte Normale ist;
    einem festen Hologramm (9), ebenfalls zur Beugung des Lichtstrahls, wobei das rotierbare und das feststehende Hologramm angeordnet sind, um den Lichtstrahl (4, 5) in wechselseitig entgegengesetzten Richtungen in Bezug auf die genannte Normale zu beugen, um so die Abweichung aufgrund der Wellenlängenänderungen des Lichtstrahles zu reduzieren; und
    einer abzutastenden Oberfläche (2), auf welcher der Lichtstrahl, der durch das rotierbare Hologramm (1) und das feststehende Hologramm (9) gebeugt ist, fokussiert wird, welche genannte Oberfläche durch den Lichtstrahl aufgrund der Rotation des rotierbaren Hologramms (1) abgetastet wird;
    dadurch gekennzeichnet, daß
    das feststehende Hologramm (9) ein Nach-Hologramm ist, das angeordnet ist, um den Lichtstrahl (5) nach der Beugung durch das rotierbare Hologramm (1) zu empfangen, und Streifen hat, so daß der Lichtstrahl (5) von dem genannten rotierbaren Hologramm nach Hindurchtreten durch das genannte Nach-Hologramm (4) konvergiert, um so die Fokussierung des genannten Lichtstrahles auf der abzutastenden Oberfläche (2) zu bewirken.

2.  Vorrichtung nach Anspruch 1, bei der das Hologramm des rotierbaren Hologramms (1) unter Verwendung von zwei Wellenfronten gebildet ist, die beide ebene Wellen sind.

3.  Vorrichtung nach Anspruch 1, bei der das Hologramm des rotierbaren Hologramms (1) unter Verwendung von zwei Wellenfronten gebildet ist, die eine ebene Welle und eine divergente Welle sind.

4.  Vorrichtung nach Anspruch 1, bei der das Hologramm des rotierbaren Hologramms (1) unter Verwendung von zwei Wellenfronten gebildet ist, die beide divergente Wellen sind.

5.  Vorrichtung nach einem der Ansprüche 1 bis 4, dadurch gekennzeichnet, daß das genannte Nach-Hologramm (9) Streifen hat, um eine lineare Abtastcharakteristik für den abtastenden Lichtstrahl, der durch das genannte Nach-Hologramm (9) gebeugt ist, zu liefern.

6.  Vorrichtung nach einem der vorhergehenden Ansprüche, bei der das genannte Nach-Hologramm (9) unter Verwendung von zwei Wellenfronten gebildet ist, die beide divergente Wellen sind.

7. Vorrichtung nach einem der Ansprüche 1 bis 5, bei der die Streifen des genannten Nach-Hologramms (9) als ein Ergebnis der Verwendung von zwei Wellenfronten geliefert wird, die eine konvergente Welle und eine divergente Welle enthalten.

8. Vorrichtung nach einem der Ansprüche 1 bis 5, bei der die Streifen des genannten Nach-Hologramms (9) als ein Ergebnis von zwei Wellenfronten geliefert werden, die eine ebene Welle und eine divergente Welle enthalten.

9. Vorrichtung nach einem der Ansprüche 1 bis 5, bei der das genannte Nach-Hologramm (9) mit zwei Wellen gebildet ist, von denen wenigstens eine eine nahezu sphärische Welle ist, die sphärische Aberrationen enthält.

10. Vorrichtung nach einem der vorhergehenden Ansprüche, bei der das Nach-Hologramm (9) unter verschiedenen Bedingungen von dem rotierbaren Hologramm (1) gebildet ist.

Fig. 1

Fig. 2

*Fig. 3*

*Fig. 4*

*Fig. 5*

*Fig. 6*

Fig. 7

## Fig. 8

## Fig. 9

# Fig. 10

# Fig. 12

# Fig. 11

FOCUS LENGTH $l_1$ [mm]

210

205

200

0

CORRESPONDING
TO THE SCANNING
WIDTH 260MM

0    50    100

POST HOLOGRAM SCANNING WIDTH
$x$ [mm]

*Fig. 13*

*Fig. 14*

*Fig. 15*

*Fig. 16*

*Fig. 17*

*Fig. 19*

*Fig. 18*

*Fig. 20*

## Fig. 21

$$S'_x f$$

## Fig. 22

$$S'_y f$$